# EUROPÄISCHE PATENTSCHRIFT

(11) **EP 1 238 612 B1**
(45) Veröffentlichungstag und Bekanntmachung des Hinweises auf die Patenterteilung: **29.10.2003**
(21) Anmeldenummer: 02002380.0
(22) Anmeldetag: 31.01.2002
(51) Int. Cl.: A47J 27/08, A47J 27/09

(54) **Vorrichtung zur automatischen Verriegelung eines Garraums mit einem zugeordneten Deckel**
Automatic locking device for a cooking space with a lid
Dispositif de verrouillage automatique d'un volume de cuisson par un couvercle

(30) Priorität: 09.03.2001 DE 10111437
(43) Veröffentlichungstag der Anmeldung: 11.09.2002
(73) Patentinhaber: Voss GrossküchenSysteme GmbH, 31157 Sarstedt (DE)
(72) Erfinder: Owsianski, Reiner, 29336 Nienhagen (DE)
(74) Vertreter: Schoppe, Fritz, Dipl.-Ing.

(56) Entgegenhaltungen:
- DE-A- 3 342 168
- US-A- 4 932 550

## Beschreibung

Die vorliegende Erfindung bezieht sich auf eine Vorrichtung zur automatischen Verriegelung eines Garraums mit einem zugeordneten Deckel, und insbesondere auf die Verriegelung von Deckeln und Garräumen von Druckgargeräten, wie sie beispielsweise in Großküchen verwendet werden.

Druckgargeräte, wie beispielsweise Dampfkochtöpfe, Druckkochkessel oder Druckgarpfannen, wie sie in Großküchen Verwendung finden, ermöglichen ein schnelles Garen dadurch, daß in einem druckfest-geschlossenen Garraum Wasserdampf erzeugt wird, der im Garraum zu einem Druckanstieg über den Umgebungsdruck führt. Der erhöhte Druck wiederum bedingt einen erhöhten Siedepunkt von Wasser, der bei Normaldruck ca. 100°C beträgt. Der Garvorgang im Druckgargerät findet daher, verglichen mit einem Garvorgang in einem offenen Gargerät, bei einer erhöhten Temperatur statt. Aufgrund der erhöhten Gartemperatur verkürzt sich die erforderliche Gardauer. Hieraus ergeben sich Vorteile bezüglich der Erhaltung verschiedener Inhaltsstoffe des Gargutes während des Garvorgangs sowie wirtschaftliche Vorteile. Ferner läßt sich eine deutliche Reduzierung der Garzeit erreichen.

Herkömmliche handelsübliche Druckgargeräte, wie beispielsweise Druckgarpfannen und Druckkochkessel, werden mittels einer Handbetätigung über einen oder zwei Handhebel und meistens unter gleichzeitigem Niederdrücken des zugeordneten Deckels verriegelt.

Ein Nachteil dieser Ausführung besteht darin, daß die Verriegelungsmechanismen meistens schwergängig sind. Ferner verhaken diese bekannten Verriegelungsmechanismen leicht. Hierdurch ist die Funktionsfähigkeit stark beeinträchtigt. Aufgrund der hakenden und schwergängigen Verriegelungsmechanismen stellt sich ein noch weitaus gravierenderes Problem ein, nämlich, daß nicht ausgeschlossen werden kann, daß der Deckel noch nicht absolut sicher gegen den anstehenden Betriebsüberdruck in seinen Halteeinrichtungen arretiert ist. Hierin ist ein erhebliches sicherheitsrelevantes Problem zu sehen, da nicht sicher vermieden werden kann, daß der Deckel bei Erreichen eines bestimmten Betriebsüberdruckes aufspringt. Dies führt zum einen zu einer Unterbrechung des Garbetriebs und ferner kann im Behälter enthaltenes Gargut herausgeschleudert werden. Ein weitaus gravierenderes Problem ist die dadurch resultierende Verletzungsgefahr, da umstehende Personen durch austretenden heißen Dampf verbrüht werden können, was zu erheblichen, wenn nicht lebensgefährlichen Verletzungen führen kann.

Ein weiterer Nachteil der handelsüblichen Verriegelungen besteht darin, daß mit zunehmender Betriebszeit der erforderliche Kraftaufwand zum Verriegeln immer mehr ansteigt, was nur durch kostenaufwendige Einstellarbeiten seitens des Hersteller-Kundendienstes vermieden werden kann.

Die EP 0 787 453 A1 beschreibt eine Vorrichtung zum Schließen und automatischen Öffnen der Abdeckung eines Kochinstruments. Die Vorrichtung umfaßt einen Mikroschalter zum Erfassen der Position der Abdeckung, Gasdruckfedern zum Öffnen der Abdeckung und einen Elektromagneten zum Halten der Abdeckung in einem geschlossenem Zustand. Der Mikroschalter erfaßt das Schließen der Abdeckung und ermöglicht den Betrieb des Elektromagneten, der die Abdeckung geschlossen hält. Nach einer durch eine Zeitgebungseinheit gegebenen Zeit wird die Stromversorgung des Elektromagneten unterbrochen, und die Gasdruckfedern bewirken eine automatische Öffnung der Abdeckung des Kochinstruments.

Die DE 30 11 286 C2 beschreibt einen Druckkochkessel für Großküchen mit einem nach oben schwenkbaren Deckel. Der Deckel ist mit einem Deckelsicherheitsventil und einem Deckelverschluß versehen. Das durch eine Drehbewegung schließbare Deckelsicherheitsventil ist mit einer Kurvenscheibe versehen, die mit einer im Deckel verschiebbar gelagerten Schubstange in Verbindung steht. Die Schubstange steht unter dem Druck einer Feder und greift mit ihrem Ende bei geschlossenem Deckelsicherheitsventil in eine Öffnung des Deckelverschlusses ein. Der Deckelverschluß kann erst dann entsichert werden, wenn das Deckelsicherheitsventil geöffnet ist. Beim Öffnen des Deckelverschlusses kommt die Öffnung in eine andere Stellung, so daß die Schubstange bei ganz geöffnetem Deckelsicherheitsventil nicht bewegt werden kann. Bei offenem Deckelverschluß ist somit das Deckelsicherheitsventil nicht schließbar.

Die DE 197 48 582 C1 beschreibt eine Schnellkochvorrichtung. Ein Einkammerkochkessel wird durch ein oberes und ein unteres Keilschieberventil verschlossen. Eine Steuerung bewirkt, daß die Keilschieber des Kessels nicht geöffnet werden können, bevor ein Druckausgleich zwischen der Kochkammer und der Umgebung erfolgt ist.

Ausgehend von diesem Stand der Technik liegt der vorliegenden Erfindung die Aufgabe zugrunde, eine vereinfachte Vorrichtung zur Verriegelung eines Garraums mit einem zugeordneten Deckel zu schaffen, welche auf einfache Art und Weise eine sichere Verriegelung des Deckels mit dem Garraum ermöglicht.

Diese Aufgabe wird durch eine Vorrichtung gemäß Anspruch 1 gelöst.

Die vorliegende Erfindung schafft eine Vorrichtung zur automatischen Verriegelung eines Garraums mit einem zugeordneten Deckel, mit
einem Verriegelungsdorn, der zwischen einer verriegelten Stellung und einer entriegelten Stellung bewegbar ist;
einer Aufnahme, die den Verriegelungsdorn in dessen verriegelter Stellung aufnimmt;
zumindest einem Sensor, der eine Stellung des Deckels erfaßt und ein Signal ausgibt, das zumindest eine geschlossene Stellung des Deckels anzeigt; und
einer Steuerung, die das Signal von dem Sensor empfängt und eine Bewegung des Verriegelungsdorns von dessen entriegelter Stellung in dessen verriegelte Stellung bewirkt, wenn das Signal anzeigt, daß der Deckel geschlossen ist.

Gemäß einem bevorzugten Ausführungsbeispiel der vorliegenden Erfindung umfaßt die Vorrichtung einen Tragerahmen in dem der Garraum und der Deckel angeordnet sind, wobei der Verriegelungsdorn beweglich in dem Tragerahmen angeordnet ist. Die Aufnahme ist an dem Garraum befestigt und der Deckel umfaßt ein Lager, mit dem der Verriegelungsdorn Eingriff nimmt, wenn derselbe in der verriegelten Stellung ist.

Gemäß einem weiteren bevorzugten Ausführungsbeispiel ist ein Motor vorgesehen, der wirksam mit dem Verriegelungsdorn gekoppelt ist, um denselben ansprechend auf ein Steuersignal von der Steuerung zwischen der verriegelten Stellung und der entriegelten Stellung zu bewegen.

Die erfindungsgemäße automatische elektromotorische Verriegelung gemäß der vorliegenden Erfindung beinhaltet eine Mehrzahl von wesentlichen Verbesserungen sowie ein verbessertes Sicherheitskonzept gegenüber herkömmlichen Konzepten. Ein Vorteil der vorliegenden Erfindung besteht darin, daß durch Vorsehen weiterer Positionssensoren, z.B. in der Aufnahme, sichergestellt ist, daß sich der Verriegelungsdorn in der verriegelten Stellung befindet, wodurch sichergestellt ist, daß eine ordnungsgemäße Verriegelung von Deckel mit Garraum vorliegt, so daß absolut kein unerwünschtes Aufspringen des Deckels unter Druck auftreten kann.

Der zum Verriegeln benötigte Kraftaufwand reduziert sich auf das Drücken eines Folientasters oder im Fall, daß der Deckel ebenfalls mit einem Motor zum Öffnen bzw. Schließen desselben versehen ist, nur auf das Drücken dieses Betätigungsknopfes. Die Kraft zum ordnungsgemäßen Schließen und Verriegeln von Deckel und Garraum wird durch den Motor aufgebracht. Auch hier wird eine Verbesserung des Sicherheitskonzeptes dadurch erreicht, daß ein Verschließen mit zu geringer Kraft vermieden wird, was im Stand der Technik beispielsweise dazu geführt hat, daß nur ein Teil der entsprechenden Verriegelungselemente mit den entsprechenden Gegenstücken verriegelt waren, ein anderer Teil jedoch nicht, wodurch es nicht möglich war, den erforderlichen Druck im Garraum aufzubauen. Nachdem diese mangelhafte Verschließung nicht ohne weiteres offensichtlich war, konnte diese erst im Laufe des Garprozesses, z.B. durch austretenden Dampf oder ähnliches, festgestellt werden, wobei eine entsprechende Korrektur erst dann möglich war, nachdem das Gargerät wieder drucklos ist. Dieses Problem wird durch die erfindungsgemäße Verriegelung vermieden, da hier sichergestellt ist, beispielsweise durch die erfindungsgemäße Anordnung der Positionssensoren, daß alle Verriegelungselemente verriegelt sind.

Gemäß einem bevorzugten Ausführungsbeispiel der vorliegenden Erfindung ist, abhängig von der jeweiligen Anwendung, ein Verriegelungsdorn und eine Aufnahme oder eine Mehrzahl von Verriegelungsdornen und zugeordneten Aufnahmen vorgesehen.

Weitere bevorzugte Ausführungsbeispiele der vorliegenden Erfindung sind in den Unteransprüchen dargelegt.

Anhand der beiliegenden Zeichnungen wird nachfolgend ein bevorzugtes Ausführungsbeispiel der vorliegenden Erfindung näher erläutert. Es zeigen:
- Fig. 1: eine schematische Darstellung eines Druckgargeräts, welches die erfindungsgemäße Verriegelungsvorrichtung aufweist;
- Fig. 2: eine schematische, detaillierte Darstellung des Druckgargeräts aus Fig. 1, die die erfindungsgemäße Verriegelungsvorrichtung näher zeigt; und
- Fig. 3: ein Ausführungsbeispiel eines Antriebsmechanismus für die erfindungsgemäße Verriegelungsvorrichtung.

Es wird darauf hingewiesen, daß bei der nachfolgenden Beschreibung des bevorzugten Ausführungsbeispiels gleiche oder gleichwirkende Elemente in den verschiedenen Zeichnungen mit gleichen Bezugszeichen versehen sind.

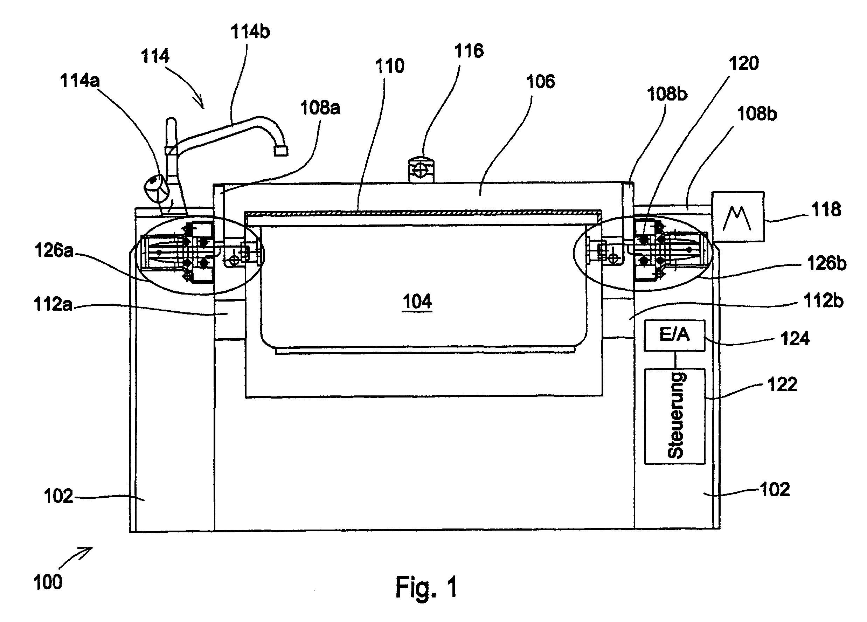

Fig. 1 zeigt eine schematische Darstellung eines Druckgargeräts 100, das einen Tragerahmen 102, einen Druckgartiegel 104 und einen Deckel 106 umfaßt. Der Deckel ist über Scharniere 108a und 108b an dem Tragerahmen 102 drehbeweglich befestigt. Über die Scharniere 108a und 108b kann der Deckel 106 von einer geöffneten Stellung in die in Fig. 1 gezeigte, geschlossene Stellung bewegt werden, in der der Deckel 106 den Druckgartiegel 104 verschließt. Zur Sicherstellung eines druckfesten Verschluß ist der Deckel 106 mit einer Dichtung versehen, die in Fig. 1 schematisch mit 110 bezeichnet ist. In der geschlossenen Stellung liegt der Deckel 106 mit seiner umlaufenden Dichtung auf einer zugeordneten Dichtfläche des Druckgartiegels 104 auf. Der Druckgartiegel 104 ist über Lagerzapfen 112a und 112b schwenkbar an dem Tragerahmen 102 befestigt, so daß, nach Beendigung eines Garvorganges das Gargut durch Verkippen des Druckgartiegels 104 aus demselben entfernt werden kann.

Das Druckgargerät 100 umfaßt ferner einen Wasserhahn 114, über den das zum Druckgaren erforderliche Wasser in den Druckgartiegel 104 bei geöffnetem Deckel 106 eingebracht werden kann. Es handelt sich hierbei um einen handelsüblichen Wasserhahn 114, mit Absperrventil 114a und verschwenkbaren Hahn 114b, so daß der Wasserhahn zum Öffnen bzw. Schließen des Deckels weggedreht werden kann.

Der Deckel 106 umfaßt ferner ein Sicherheitsventil mit einem Be- und Entlüftungsventil 116, daß zum einen dazu dient gesteuert Druck aus dem Druckgartiegel 104 nach der Beendigung des Garvorganges abzulassen und zum anderen als Überdruckventil wirksam ist, um den Aufbau eines zu hohen Betriebsdruckes innerhalb des Druckgartiegels 104 sicher zu vermeiden.

Bei dem in Fig. 1 dargestellten Ausführungsbeispiel umfaßt das Druckgargerät 100 jeweils einen Motor 118, der in dem Tragerahmen 102 angeordnet ist. Es wird darauf hingewiesen, daß es sich bei der Darstellung um eine rein schematische Darstellung handelt und der Motor 118 auf übliche Art und Weise mit dem Deckel 106 zusammenwirken kann, um denselben zwischen einer geöffneten Stellung und einer geschlossenen Stellung zu bewegen. Bei einem anderen, nicht dargestellten Ausführungsbeispiel kann auf den Motor 118 verzichtet werden. Stattdessen umfaßt der Deckel 106 übliche Handgriffe, um denselben zwischen der geschlossenen und der geöffneten Stellung zu bewegen.

Eine Sensoreinrichtung 120 ist bei dem in Fig. 1 gezeigten Beispiel im Bereich des Scharniers 108b angeordnet. Die Sensoreinrichtung 120 erfaßt, ob der Deckel in seinem geöffneten Zustand ist oder ob der Deckel in seinem geschlossenen Zustand ist, und gibt ein entsprechendes Signal aus.

Das Druckgargerät 100 umfaßt ferner eine Steuerung 122 sowie eine Eingabe/Ausgabeeinheit 124, die beide in den Tragerahmen 102 angeordnet sind. Die Eingabe/Ausgabeeinheit umfaßt z.B. ein Bedienfeld zum Eingeben der erforderlichen Parameter zum Betrieb des Druckgargeräts sowie ferner eine entsprechende Eingabeeinrichtung in der Form einer Taste oder ähnlichem zum Verriegeln bzw. Entriegeln des Deckels 106 und, sofern der Motor 118 vorgesehen ist, zum Öffnen und Schließen des Deckels 106. Ferner umfaßt die Eingabe/Ausgabeeinheit 124 eine Anzeige, die Betriebsparameter oder Fehlerzustände einem Benutzer des Druckgargeräts 100 anzeigt.

Außer der in Fig. 1 gezeigten, dezentralen Anordnung von Steuerung und Eingabe/Ausgabeeinheit kann z.B. in Großküchen eine zentrale Steuerung für eine Mehrzahl von Geräten und eine zentrale Anzeige vorgesehen sein, über die eine Steuerung der einzelnen Geräte und die Anzeige der den Geräten zugeordneten Parameter und Meldungen erfolgt.

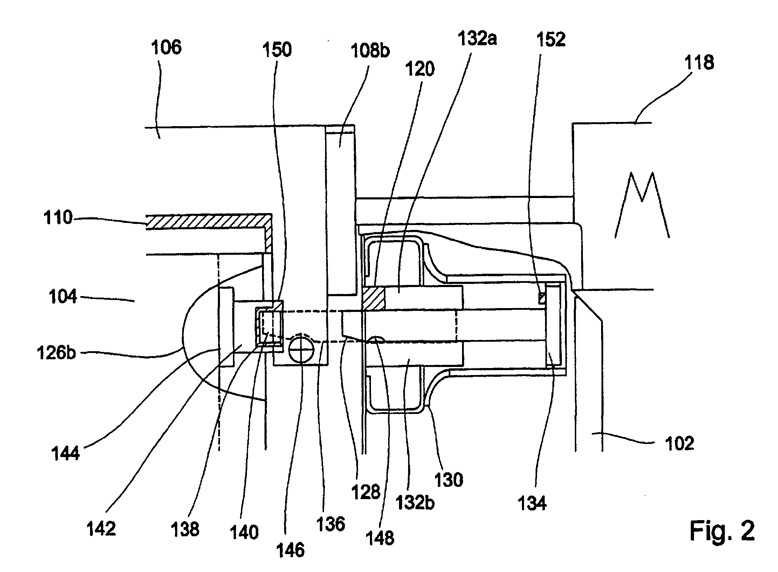

Das Druckgargerät 100 gemäß dem Ausführungsbeispiel in Fig. 1 umfaßt zwei Verriegelungsmechanismen 126a und 126b, die baugleich sind und deren Aufbau nachfolgend anhand der Fig. 2 näher erläutert wird.

In Fig. 2 ist der in Fig. 1 dargestellte rechte Verriegelungsmechanismus 126b detaillierter dargestellt, wobei in Fig. 2 diejenigen Elemente, die aus Fig. 1 bekannt sind, mit den gleichen Bezugszeichen versehen sind und nicht erneut beschrieben werden.

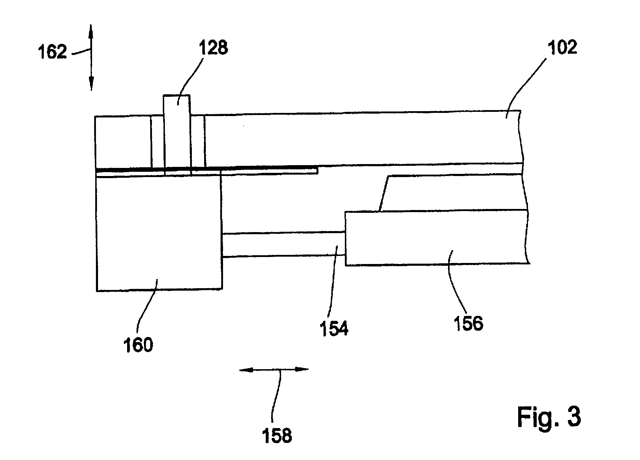

Der Verriegelungsmechanismus 126b umfaßt einen Verriegelungsdorn 128, der in einem Gehäuse 130 aufgenommen ist und durch zwei Führungen 132 und 132b geführt ist. Das Gehäuse 130 ist, wie zu sehen, in dem Tragerahmen 102 angeordnet und darin befestigt. Innerhalb des Gehäuses 130 sind die Führungen 132a und 132b befestigt, zwischen denen sich der Verriegelungsdorn 128 bewegt. Der Verriegelungsdorn 128 ist über eine, nicht dargestellte Antriebseinrichtung, die später anhand der Fig. 3 näher erläutert wird, beweglich in dem Gehäuse 130 gehalten, wobei der Verriegelungsdorn bzw. das Verriegelungselement 128 zwischen einer entriegelten Stellung und einer verriegelten Stellung bewegt werden kann. Die entriegelte Stellung ist durch den Verriegelungsdorn 128, der in durchgezogenen Linien gezeichnet ist, dargestellt. Die verriegelte Stellung ist durch den Verriegelungsdorn 136 dargestellt, der in gestrichelten Linien gezeichnet ist und von dem Anschlag 134 beabstandet angeordnet ist.

Bei dem in Fig. 2 gezeigten Ausführungsbeispiel ist ferner ein Element 138 vorgesehen, welches einen vorderen Abschnitt 140 des Verriegelungsdorns in dessen verriegelter Stellung aufnimmt. Bei dem gezeigten Ausführungsbeispiel ist das Element 138 eine in einem Block 142 gebildete Ausnehmung, die der Form nach dem vorderen Ende des Dorns entspricht. Der Block 142 ist an einer Seitenwand 144 des Druckgartiegels befestigt.

Der Deckel 106 umfaßt eine Welle 146. Der Verriegelungsdorn umfaßt eine Ausnehmung 148, die an die Form der Welle 146 angepaßt ist, so daß die Ausnehmung 148 des Verriegelungsdorns in dessen verriegelter Stellung mit der Welle 146 Eingriff nimmt.

Ferner kann, wie bei dem Ausführungsbeispiel in Fig. 2 gezeigt ist, ein erster Positionssensor 150 vorgesehen sein, der dem Gehäuse 130 zugeordnet ist, und der ein Signal erzeugt, wenn der Verriegelungsdorn in dessen verriegelter Stellung ist. Ferner kann ein zweiter Positionssensor 152 vorgesehen sein, der ein Ende des Verriegelungsdorns erfaßt, wenn dieses am Anfang 134 anliegt, so daß der Sensor 152 ein Signal erzeugt, welches eine entriegelte Stellung des Verriegelungsdorns anzeigt.

Nachfolgend wird die Funktionsweise der erfindungsgemäßen Vorrichtung anhand der Figuren 1 und 2 kurz erläutert. Der Deckel 106 des Druckgargeräts 100 wird aus seiner Ruhelage im geöffneten Zustand, z.B. durch Betätigung des Motors 118, bewegt, bis dieser mit seiner umlaufenden Dichtung auf der Dichtfläche des Druckgartiegels 104 aufliegt.

Der elektronische Sensor 120 gibt erst in dieser definierten Endlage des Deckels 106 ein Signal an die Steuerung 122 aus, welche eine Verriegelung freigibt. Jeder andere Lagezustand des Deckels 106 wird für den Fall einer Betätigung einer Verriegelungstaste über eine Fehlermeldung auf dem Anzeigemonitor des Eingabe/Ausgabegeräts 124 angezeigt. Nach dem Betätigen der Deckelverriegelungstaste an der Eingabe/Ausgabeeinheit 124 bewirkt die Steuerung 122 daß der nachfolgend noch näher beschriebene Motor eine Verschiebung des Verriegelungsdorns aus dessen entriegelter Stellung 128 bewirkt. Der Motor schiebt den Verriegelungsdorn mit dessen Aussparung bzw. Ausnehmung 148 über die im Deckel 106 fest angeordnete Welle 146 in dessen verriegelte Stellung 136. Auf der Welle ist vorzugsweise eine drehbar-gelagerte Lagerhülse befestigt.

Vor Erreichen der Verriegelungs- bzw. Arretierungsstellung 136 taucht der Verriegelungsdorn in die Aufnahme/Sicherung 138 ein, die fest mit dem Druckgartiegel 104 verbunden ist.

Ein Auffahren der Verriegelung unter Druck wird durch einen Sichterheits-Druckschalter (nicht dargestellt) verhindert. Erst bei drucklosem System, was durch das automatische Belüftungsventil 116 erreicht wird, kann die automatische Deckelverriegelung in Funktion treten.

Der Verriegelungsdorn wird, wie oben beschrieben, über die Sensoren 150, 152, die beispielsweise als elektronische Annäherungsschalter ausgeführt sind, bezüglich der definierten Endlage, nämlich "Verriegelung auf" und "Verriegelung zu", überwacht. Jeder Lagefehlzustand wird an die Steuerung 122 und von dieser an den Anzeigemonitor der Eingabe/Ausgabeeinheit 124 weitergeleitet. Wird ein solcher Fehlerzustand angetroffen, wird keine weitere automatische Funktion durch die Steuerung bewirkt. Der gerade beschriebene Fehlerzustand wird beispielsweise dadurch erfaßt, daß nach einer Betätigung des Motors ein Zeitgeber in Lauf gesetzt wird, nach dessen Ablauf festgestellt wird, ob ein entsprechendes Signal des ersten oder zweiten Positionssensors 150 bzw. 152 erhalten wurde, wenn dies nicht der Fall ist, befindet sich der Verriegelungsdorn nach Ablauf der Zeit zwischen diesen beiden Stellungen, also in einer fehlerhaften Stellung, die dann als Fehlerzustand angezeigt wird.

Die Steuerung kann ferner ein Fehlersignal erzeugen und ausgeben, wenn ein Betätigungssignal zum Verriegeln des Deckels empfangen wird, wenn derselbe noch geöffnet ist. Ferner kann die Steuerung ein Fehlersignal erzeugen und ausgeben, wenn ein weiteres Betätigungssignal erhalten wird, das eine Öffnung des Deckels anfordert, obwohl der Garraum noch unter Druck steht.

Die Steuerung kann gemäß einem weiteren Ausführungsbeispiel ferner ein Signal empfangen, welches den Druck innerhalb des Druckgartiegels 104 bzw. eine Druckdifferenz zwischen dem Innendruck und dem Umgebungsdruck darstellt. Die Steuerung wird erst dann eine Entriegelung des Deckels zulassen, wenn das Signal anzeigt, daß das System drucklos ist. Das gerade beschriebene Signal kann der Steuerung durch einen Druckschalter bereit gestellt werden, der den Differenzdruck zwischen dem Druckgartiegelinnendruck und dem Umgebungsdruck erfassen und ein entsprechendes Signal erzeugen kann.

In Fig. 3 ist ein Ausführungsbeispiel für den Antriebe des Verriegelungsdorns schematisch dargestellt. Fig. 3 zeigt einen Teil des Tragerahmens 102, und ferner ist schematisch der Verriegelungsdorn 128 gezeigt. Ein Motor 156 ist vorgesehen, der eine Antriebsstange 154 in die mit dem Pfeil 158 angezeigte Richtung treibt. Über eine Umlenkeinrichtung 160 wird die Bewegung der Antriebsstange 154 von der Richtung 158 in die mit dem Pfeil 162 dargestellte Richtung umgelenkt, so daß der Verriegelungsdorn entsprechend bewegt wird. Anstelle oder zusätzlich zu den Positionssensoren 150 und 152 können entsprechende Sensoren in dem Antrieb 156 vorgesehen sein, wodurch entsprechende Anfangs- und End-Stellungen des Motors und damit entsprechend verriegelte und entriegelte Stellungen festgestellt werden können und durch entsprechende Signale an die Steuerung weitergeleitet werden.

Durch die im vorhergehenden beschriebene umfassende Steuerung und die beschriebenen Steuerungsmöglichkeiten wird der eingangs beschriebene sichere Betrieb des Druckgargeräts 100 ermöglicht und die oben unter Bezugnahme auf die bekannten Druckgargeräte beschriebenen Nachteile werden sicher vermieden.

Die vorliegende Erfindung ist jedoch nicht auf die im vorhergehenden beschriebenen Ausführungsbeispiele beschränkt, sondern betrifft allgemein die eingangs beschriebene Vorrichtung zur automatischen Verriegelung des Garraums mit dem zugeordneten Deckel, wobei abweichend von den beschriebenen Ausführungsbeispielen der Verriegelungsdorn dem Garraum oder dem Deckel und die Aufnahme dem Deckel oder dem Garraum zugeordnet sein können, so daß sich verschiedene Ausgestaltungsmöglichkeiten, abhängig von den mechanischen Gegebenheiten, für die Anordnung der entsprechenden Verriegelungselemente ergeben.

Die oben beschriebenen Sensoren können beispielsweise im Fall der Positionssensoren 150 und 152 Annäherungsschalter oder Mikroschalter sein, jedoch sind auch andere, z.B. kontaktlose Sensoreinrichtungen möglich. Der Sensor 120 ist beispielsweise durch einen induktiven Nährungsschalter gebildet, jedoch können auch andere Arten von Sensoren verwendet werden.

Der Motor zur Bewegung des Verriegelungsdorns zwischen der verriegelten und der entriegelten Stellung stellt bei 24V Gleichstrom beispielsweise eine Zug-/Druckkraft von etwa 500 N bereit und schafft einen Hub von 70 mm bei einer Schubgeschwindigkeit von 15 mm pro Sekunde.

Im vorhergehenden wurde eine symmetrische Anordnung der verschiedenen Verriegelungselemente 126a und 126b beschrieben, jedoch ist die vorliegende Erfindung nicht auf die dargestellte Anordnung der einzelnen Verriegelungselemente beschränkt. Vielmehr können, abhängig und in Erfordernissen andere Anordnungen und Anzahlen von Verriegelungselementen verwendet werden.

## Patentansprüche

1. Vorrichtung zur automatischen Verriegelung eines Garraums (104) mit einem zugeordneten Deckel (106), mit
einem Verriegelungsdorn (128), (136), der zwischen einer verriegelten Stellung und einer entriegelten Stellung bewegbar ist;
einer Aufnahme (138), die den Verriegelungsdorn (136) in dessen verriegelter Stellung aufnimmt;
**gekennzeichnet durch**
zumindest einen Sensor (120), der eine Stellung des Deckels (106) erfaßt und ein Signal ausgibt, das zumindest eine geschlossene Stellung des Deckels (106) anzeigt; und
eine Steuerung (122), die das Signal von dem Sensor (120) empfängt und eine Bewegung des Verriegelungsdorns (128), (136) von dessen entriegelter Stellung in die verriegelte Stellung freigibt, wenn das Signal anzeigt, daß der Deckel (106) geschlossen ist.

2. Vorrichtung nach Anspruch 1, bei der der Verriegelungsdorn dem Garraum und die Aufnahme dem Deckel zugeordnet sind.

3. Vorrichtung nach Anspruch 1, bei der der Verriegelungsdorn dem Deckel und die Aufnahme dem Garraum zugeordnet sind.

4. Vorrichtung nach Anspruch 1, mit einem Tragerahmen (102), an dem der Garraum (104) und der Deckel (106) angeordnet sind, wobei der Verriegelungsdorn (128), (136) beweglich in dem Tragerahmen (102) gehalten ist, wobei die Aufnahme (138) an dem Garraum (104) angeordnet ist, wobei der Deckel (106) ein Lager (146) aufweist, mit dem der Verriegelungsdorn (128), (136) Eingriff nimmt, wenn derselbe in der verriegelten Stellung ist.

5. Vorrichtung nach Anspruch 4, bei der das Lager (146) durch eine Welle gebildet ist und der Verriegelungsdorn (128), (136) eine an die Welle (146) angepaßte Ausnehmung (148) aufweist, wobei die Ausnehmung (148) mit der Welle (146) in der verriegelten Stellung des Verriegelungsdorns in Kontakt ist.

6. Vorrichtung nach Anspruch 4 oder 5, bei der der zumindest eine Sensor (120) in dem Tragerahmen (102) benachbart zu dem Deckel (106) angeordnet ist.

7. Vorrichtung nach einem der Ansprüche 4 bis 6, bei der die Steuerung (122) in dem Tragerahmen (102) angeordnet ist, wobei die Vorrichtung ferner eine Eingabe/Ausgabeeinheit (124) aufweist.

8. Vorrichtung nach einem der Ansprüche 1 bis 7, bei der die Steuerung (122) angepaßt ist, ein Betätigungssignal zu empfangen, wobei die Steuerung (122) eine Bewegung des Verriegelungsdorns (128), (136) in die verriegelte Stellung ansprechend auf das Betätigungssignal bewirkt.

9. Vorrichtung nach einem der Ansprüche 1 bis 8, mit
einem ersten Positionssensor (150), der ein Signal erzeugt, das die verriegelte Stellung des Verriegelungsdorns (128), (136) anzeigt; und
einem zweiten Positionssensor (152), der ein Signal erzeugt, das die entriegelte Stellung des Verriegelungsdorns (128), (136) anzeigt.

10. Vorrichtung nach Anspruch 9, bei dem der Positionssensor (150) der Aufnahme (138) zugeordnet ist, und bei der der zweite Positionssensor (152) einem Gehäuse (130) des Verriegelungsdorns (128), (136) zugeordnet ist.

11. Vorrichtung nach einem der Ansprüche 1 bis 10, mit
einem Motor (156), der wirksam mit dem Verriegelungsdorn (128), (136) gekoppelt ist, um denselben ansprechend auf ein Steuerungssignal von der Steuerung (122) zwischen der verriegelten Stellung und der entriegelten Stellung zu bewegen.

12. Vorrichtung nach Anspruch 11, bei der der erste und der zweite Positionssensor dem Motor (156) zugeordnet sind.

13. Vorrichtung nach einem der Ansprüche 1 bis 12, bei der die Steuerung (122) ein Drucksignal empfängt, das den Druck in dem Garraum (104) anzeigt, wobei die Steuerung (122) eine Bewegung des Verriegelungsdorns (128), (136) aus der verriegelten Stellung zulässt, wenn das Drucksignal anzeigt, daß das System drucklos ist.

14. Vorrichtung nach Anspruch 13, mit einem Druckschalter, der eine Druckdifferenz zwischen dem Garraum (104) und dem Umgebungsdruck erfaßt und das Drucksignal erzeugt.

15. Vorrichtung nach einem der Ansprüche 8 bis 14, bei dem die Steuerung (122) angepaßt ist, um ein weiteres Betätigungssignal zu empfangen, wobei die Steuerung (122) die Bewegung des Verriegelungsdorns (128), (136) aus der verriegelten Stellung ansprechend auf das weitere Betätigungssignal bewirkt.

16. Vorrichtung nach Anspruch 15, bei der die Steuerung (122) ein Fehlersignal erzeugt und ausgibt, wenn die Steuerung (122)
- das Betätigungssignal bei geöffnetem Deckel (106) empfängt;
- das weitere Betätigungssignal bei unter Druck stehendem Garraum (104) empfängt; oder
- wenn weder der erste noch der zweite Positionssensor (150), (152) nach Ablauf einer vorbestimmten zeitdauer ein Signal erzeugen, das das Erreichen der verriegelten bzw. der entriegelten Stellung anzeigt.

17. Vorrichtung nach einem der Ansprüche 1 bis 16, mit einem Antrieb (118), der den Deckel (106) zwischen einer geöffneten und einer geschlossenen Stellung bewegt.

18. Vorrichtung nach Anspruch 17, bei der die Steuerung (122) den Antrieb (118) des Deckels (106) treibt, um den Deckel (106) ansprechend auf das Betätigungssignal bzw. auf das weitere Betätigungssignal zu öffnen bzw. zu schließen.

19. Vorrichtung nach einem der Ansprüche 1 bis 18, mit einem Entlüftungsventil (116), das vor dem Öffen des Deckels (106) einen Druck aus dem Garraum (104) abläßt.

20. Vorrichtung nach einem der Ansprüche 1 bis 19, mit einer Mehrzahl von Verriegelungsdornen und einer Mehrzahl von Aufnahmen.

## Claims

1. Device for automatically locking a cooking room (104) with an associated lid (106), comprising
a locking bolt (128), (136) movable between a locked position and an un-locked position;
a receptacle (138) which receives the locking bolt (136) in its locked position;
**characterized by**
at least one sensor (120) which detects a position of the lid (106) and outputs a signal which indicates at least a closed position of the lid (106); and
a controller (122) which receives the signal from the sensor (120) and enables a movement of the locking bolt (128, 136) from its un-locked position into the locked position when the signal indicates that the lid (106) is closed.

2. Device according to claim 1, wherein the locking bolt is associated with the cooking room and the receptacle is associated with the lid.

3. Device according to claim 1, wherein the locking bolt is associated with the lid and the receptacle is associated with the cooking room.

4. Device according to claim 1, having a support frame (102) on which the cooking room (104) and the lid (106) are arranged, wherein the locking bolt (128, 136) is held movable in the support frame (102), wherein the receptacle (138) is arranged at the cooking room (104), wherein the lid (106) comprises a bearing (146), with which the locking bolt (128, 136) engages when the same is in the locked position.

5. Device according to claim 4, wherein the bearing (146) is formed by a shaft and the locking bolt (128), (136) comprises a recess (148) adjusted to the shaft (146), wherein the recess (148) is in contact with the shaft (146) in the locked position of the locking bolt.

6. Device according to claim 4 or 5, wherein the at least one sensor (120) is arranged within the support frame (102) adjacent to the lid (106).

7. Device according to one of claims 4 to 6, wherein the controller (122) is arranged within the support frame (102), wherein the device further comprises an input/output unit (124).

8. Device according to one of claims 1 to 7, wherein the controller (122) is adjusted to receive an actuating signal, wherein the controller (122) causes a movement of the locking bolt (128), (136) into the locked position in response to the actuating signal.

9. Device according to one of claims 1 to 8, comprising:
a first position sensor (150) generating a signal which indicates the locked position of the locking bolt (128), (136); and
a second position sensor (152) generating a signal which indicates the un-locked position of the locking bolt (128), (136).

10. Device according to claim 9, wherein the position sensor (150) is associated with the receptacle (138) and wherein the second position sensor (152) is associated with a housing (130) of the locking bolt (128, 136).

11. Device according to one of claims 1 to 10, comprising:
a motor (156) operatively coupled to the locking bolt (128), (136) to move the same in response to a control signal from the controller (122) between the locked position and the un-locked position.

12. Device according to claim 11, wherein the first and the second position sensors are associated with the motor (156).

13. Device according to one of claims 1 to 12, wherein the controller (122) receives a pressure signal indicating the pressure within the cooking room (104), wherein the controller (122) enables a movement of the locking bolt (128), (136) from the locked position, when the pressure signal indicates that the system is pressureless.

14. Device according to claim 13, comprising a pressure switch detecting a pressure difference between the cooking room (104) and the ambient pressure and generating the pressure signal.

15. Device according to one of claims 8 to 14, wherein the controller (122) is adjusted to receive a further actuating signal, wherein the controller (122) causes the movement of the locking bolt (128), (136) from the locked position in response to the further actuating signal.

16. Device according to claim 15, wherein the controller (122) generates an error signal and outputs the same when the controller (122)
receives the actuating signal with the lid (106) opened;
receives the further actuating signal with the cooking room (104) under pressure; or
when neither the first nor the second position sensor (150), (152) generate a signal after the expiry of a predetermined period, indicating that the locked or the un-locked position is achieved, respectively.

17. Device according to one of claims 1 to 16, comprising a drive (118) moving the lid (106) between an open and a closed position.

18. Device according to claim 17, wherein the controller (122) drives the drive (118) of the lid (106) in order to open or close the lid (106), respectively, in response to the actuating signal or to the further actuating signal, respectively.

19. Device according to one of claims 1 to 18, comprising a vent valve (116) venting a pressure from the cooking room (104) before the opening of the lid (106).

20. Device according to one of claims 1 to 19, comprising a plurality of locking bolts and a plurality of receptacles.

## Revendications

1. Dispositif de verrouillage automatique d'un volume de cuisson (104) par un couvercle (106) y associé, avec
un mandrin de verrouillage (128), (136) pouvant être déplacé entre une position verrouillée et une position déverrouillée;
un logement (138) recevant le mandrin de verrouillage (136) dans sa position verrouillée;
**caractérisé par**
au moins un capteur (120) qui détecte une position du couvercle (106) et émet un signal indiquant au moins une position fermée du couvercle (106); et
une commande (122) qui reçoit le signal du capteur (120) et provoque un déplacement du mandrin de verrouillage (128), (136) de sa position déverrouillée à la position verrouillée, lorsque le signal indique que le couvercle (106) est fermé.

2. Dispositif selon la revendication 1, dans lequel le mandrin de verrouillage est associé au volume de cuisson et le logement est associé au couvercle.

3. Dispositif selon la revendication 1, dans lequel le mandrin de verrouillage est associé au couvercle et le logement est associé au volume de cuisson.

4. Dispositif selon la revendication 1, avec un bâti de support (102) sur lequel sont disposés le volume de cuisson (104) et le couvercle (106), le mandrin de verrouillage (128), (136) étant maintenu mobile dans le bâti de support (102), le logement (138) étant disposé sur le volume de cuisson (104), le couvercle (106) présentant un roulement (146) avec lequel vient en prise le mandrin de verrouillage (128), (136) lorsque celui-ci se trouve en position verrouillée.

5. Dispositif selon la revendication 4, dans lequel le roulement (146) est constitué par un arbre et le mandrin de verrouillage (128), (136) présente un évidement (148) adapté à l'arbre (146), l'évidement (148) étant en contact avec l'arbre (146) dans la position verrouillée du mandrin de verrouillage.

6. Dispositif selon la revendication 4 ou 5, dans lequel l'au moins un capteur (120) est disposé dans le châssis de support (102), adjacent au couvercle (106).

7. Dispositif selon l'une des revendications 4 à 6, dans lequel la commande (122) est disposée dans le châssis de support (102), le dispositif présentant, par ailleurs, une unité d'entrée/sortie (124).

8. Dispositif selon l'une des revendications 1 à 7, dans lequel la commande (122) est adaptée pour recevoir un signal d'actionnement, la commande (122) provoquant un déplacement du mandrin de verrouillage (128), (136) à la position verrouillée en réaction au signal d'actionnement.

9. Dispositif selon l'une des revendications 1 à 8, avec
un premier capteur de position (150) générant un signal indiquant la position verrouillée du mandrin de verrouillage (128), (136); et
un second capteur de position (152) générant un signal indiquant la position déverrouillée du mandrin de verrouillage (128), (136).

10. Dispositif selon la revendication 9, dans lequel le capteur de position (150) est associé au logement (138) et dans lequel le second capteur de position (152) est associé à un boîtier (130) du mandrin de verrouillage (128), (136).

11. Dispositif selon l'une des revendications 1 à 10, avec
un moteur (156) qui est couplé de manière active au mandrin de verrouillage (128), (136), pour déplacer ce dernier, en réaction à un signal de commande de la commande (122) entre la position verrouillée et la position déverrouillée.

12. Dispositif selon la revendication 11, dans lequel le premier et le second capteur de position sont associés au moteur (156).

13. Dispositif selon l'une des revendications 1 à 12, dans lequel la commande (122) reçoit un signal de pression indiquant la pression dans le volume de cuisson (104), la commande (122) permettant un déplacement du mandrin de verrouillage (128), (136) hors de la position verrouillée lorsque le signal de pression indique que le système n'est pas sous pression.

14. Dispositif selon la revendication 13, avec un interrupteur à pression qui détecte une différence de pression entre le volume de cuisson (104) et la pression ambiante et génère le signal de pression.

15. Dispositif selon l'une des revendications 8 à 14, dans lequel la commande (122) est adaptée pour recevoir un autre signal d'actionnement, la commande (122) provoquant le déplacement du mandrin de verrouillage (128), (136) hors de la position verrouillée en réaction à l'autre signal d'actionnement.

16. Dispositif selon la revendication 15, dans lequel la commande (122) génère et émet un signal d'erreur lorsque la commande (122)
- reçoit le signal d'actionnement lorsque le couvercle (106) est ouvert;
- reçoit l'autre signal d'actionnement lorsque le volume de cuisson (104) est sous pression; ou
- lorsque ni le premier, ni le second capteur de position (150), (152) ne génèrent un signal après écoulement d'un laps de temps prédéterminé indiquant l'atteinte de la position verrouillée ou la position déverrouillée.

17. Dispositif selon l'une des revendications 1 à 16, avec un entraînement (118) qui déplace le couvercle (106) entre une position ouverte et une position fermée.

18. Dispositif selon la revendication 17, dans lequel la commande (122) actionne l'entraînement (118) du couvercle (106), pour ouvrir ou fermer le couvercle (106) en réaction au signal d'actionnement, respectivement à l'autre signal d'actionnement.

19. Dispositif selon l'une des revendications 1 à 18, avec une soupape de purge d'air (116) qui, avant l'ouverture du couvercle (106), décharge une pression du volume de cuisson (104).

20. Dispositif selon l'une des revendications 1 à 19, avec une pluralité de mandrins de verrouillage et une pluralité de logements.
